(19) Europäisches Patentamt
European Patent Office
Office européen des brevets

(11) EP 3 161 461 B1

(12) FASCICULE DE BREVET EUROPEEN

(45) Date de publication et mention de la délivrance du brevet:
06.05.2020 Bulletin 2020/19

(21) Numéro de dépôt: 15742349.2

(22) Date de dépôt: 25.06.2015

(51) Int Cl.:
*G01N 23/20* (2018.01)     *G01N 23/201* (2018.01)
*G01N 23/087* (2018.01)

(86) Numéro de dépôt international:
PCT/FR2015/051714

(87) Numéro de publication internationale:
WO 2016/001536 (07.01.2016 Gazette 2016/01)

(54) **PROCÉDÉ ET SYSTÈME D'ANALYSE D'UN OBJET PAR DIFFRACTOMÉTRIE UTILISANT UN SPECTRE EN DIFFUSION ET UN SPECTRE EN TRANSMISSION**

VERFAHREN UND SYSTEM ZUR ANALYSE EINES OBJEKTS MITTELS DIFFRAKTOMETRIE UNTER VERWENDUNG EINES STREUUNGSSPEKTRUMS UND EINES ÜBERTRAGUNGSSPEKTRUM

METHOD AND SYSTEM FOR ANALYSING AN OBJECT BY DIFFRACTOMETRY USING A SCATTER SPECTRUM AND A TRANSMISSION SPECTRUM

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: 30.06.2014 FR 1456186

(43) Date de publication de la demande:
03.05.2017 Bulletin 2017/18

(73) Titulaire: **Commissariat à l'Energie Atomique et aux Energies Alternatives**
**75015 Paris (FR)**

(72) Inventeurs:
• **PAULUS, Caroline**
  **38000 Grenoble (FR)**
• **TABARY, Joachim**
  **38600 Fontaine (FR)**

(74) Mandataire: **Santarelli**
**49, avenue des Champs-Elysées**
**75008 Paris (FR)**

(56) Documents cités:
EP-A1- 2 075 571      EP-A2- 0 311 177
WO-A1-2006/075296   US-A- 5 428 657
US-A1- 2009 168 958   US-A1- 2012 133 516

**Description**

La présente invention concerne un procédé d'analyse d'un objet par diffractométrie, et un système de détection associé.

La diffractométrie correspond à l'irradiation d'un matériau ou objet à l'aide d'une source de rayonnement électromagnétique, de type X ou gamma, suivie de l'analyse du rayonnement de diffusion élastique à faible angle. L'expression « rayonnement de diffusion élastique à faible angle » désigne le rayonnement diffusé par le matériau ou objet, de manière cohérente, selon un angle inférieur à 15°, voire même inférieur à 10°, par rapport à la direction du rayonnement incident au matériau ou objet. Au-delà en 10°, en effet, la diffusion élastique, ou diffusion Rayleigh, devient progressivement négligeable.

Il est connu d'utiliser la diffractométrie pour détecter certaines substances cristallines telles que la plupart des explosifs ou de nombreuses autres structures dangereuses ou illégales.

L'invention trouve ainsi une application dans le domaine de la sécurité, plus particulièrement dans le domaine de la détection de matériaux explosifs dans un bagage.

Elle est également utile dans le domaine médical, par exemple pour la localisation d'une tumeur dans un sein. En effet, une publication de l'UCL (Pani, S. et al. « Characterization of breast tissue using energy-dispersive X-ray diffraction computed tomography ». Applied Radiation and Isotopes 68, n° 10 (2010): 1980-1987) a pu démontrer la possibilité de différencier (tissus adipeux, fibreux, tumeurs bénignes, adénofibromes, carcinomes...) des objets de tissus biologiques issus de biopsies du sein grâce à la mesure en diffraction de ces tissus.

L'analyse du rayonnement diffusé selon un angle faible (à noter que le terme « diffracté » est généralement utilisé pour un matériau cristallin tandis que le terme « diffusé » est généralement utilisé pour un matériau amorphe, mais ces deux termes sont ici indifféremment utilisés, de même que les termes diffusion et diffraction) par un matériau est une méthode d'analyse physico-chimique qui fournit des informations sur la structure de la matière permettant ainsi une meilleure caractérisation des matériaux.

Il est connu que l'analyse du spectre du rayonnement diffusé à faible angle, ou spectre de diffusion, permet d'établir une signature du matériau examiné.

Pour les matériaux cristallins par exemple, lorsque la longueur d'onde des rayons X irradiants est du même ordre de grandeur que les distances inter-réticulaires (quelques angströms), les rayons diffusés génèrent des interférences constructives ou destructives selon leur énergie et leur angle de diffusion. Les conditions pour lesquelles les interférences sont constructives sont déterminées par la loi de Bragg.. Pour un matériau cristallin, cette loi lie la distance inter-réticulaire, l'énergie du rayonnement diffusé et l'angle de diffusion, selon l'équation suivante :

$$E_{hkl} = n \frac{hc}{2d_{hkl} \sin(\theta/2)}$$

Avec :

$d_{hkl}$ : distance inter-réticulaire entre les plans cristallographiques du cristal irradié ;
{hkl} : indices de Miller
$\theta$ : angle de diffusion, c'est-à-dire l'angle formé entre le rayonnement diffusé analysé et le faisceau incident au cristal irradié
h : constante de Planck,
c : vitesse de la lumière
n : l'ordre de l'interférence.

On peut repérer les pics de Bragg par le transfert de quantité de mouvement défini par l'équation suivante :

$$x = \frac{\sin(\theta/2)}{\lambda} = \frac{n}{2d_{hkl}}$$

L'intérêt d'exprimer les profils de diffusion (intensité mesurée) en fonction de $x$ est dû au fait qu'un pic d'intensité peut être mesuré pour différents couples ($\lambda,\theta$) mais pour une seule valeur de $x$ ($n$ fixe).

Dans le cas de matériaux non cristallins, le spectre de diffusion à angle faible est également représentatif du matériau examiné.

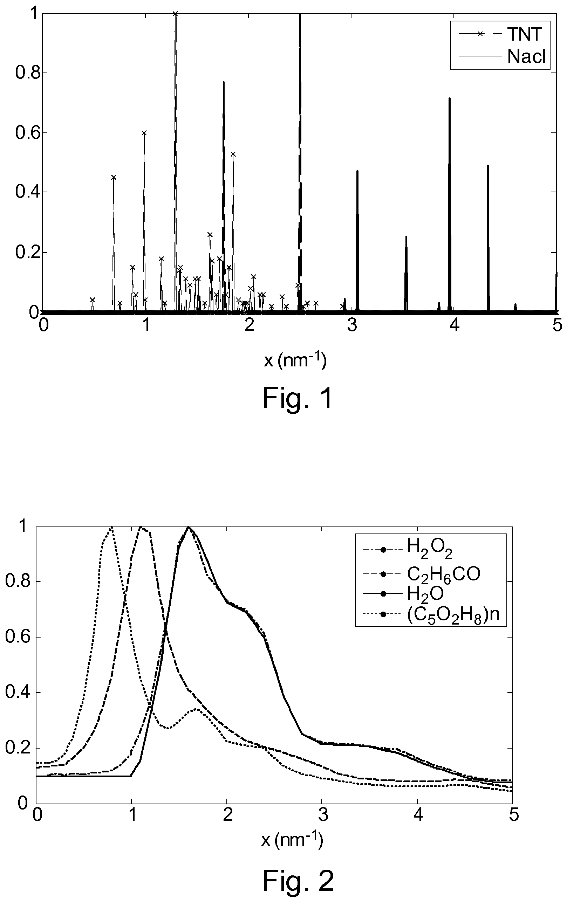

A titre d'exemples, la figure 1 annexée montre les pics de Bragg de deux cristaux, à savoir le TNT (trinitrotoluène) et le sel (NaCl).

A l'instar des interférences déterminées par la loi de Bragg pour un matériau cristallin, des phénomènes d'interférence peuvent également se produire entre les atomes et/ou molécules d'un matériau amorphe tel qu'un liquide, faisant cette fois intervenir une distribution continue de distances (fonction d'interférence moléculaire, notée FIM). En effet, beaucoup de matériaux amorphes ont des arrangements réguliers sur des distances nanométriques (on parle d'ordre à courte distance). Ce type d'ordre est déterminé par des liaisons chimiques fortes pour les liaisons covalentes et ioniques. Cet ordre à courte distance provoque des interférences intramoléculaires et intermoléculaires. La figure 2 annexée illustre des exemples de fonctions d'interférence moléculaire, à savoir la FIM normalisée de l'eau ($H_2O$), la FIM normalisée de l'eau oxygénée ($H_2O_2$), la FIM normalisée de l'acétone ($C_2H_6CO$), et la FIM normalisée d'un matériau connu sous le nom commercial de plexiglas® (($C_5O_2H_8$)n).

Les diffractomètres les plus courants sont dits à dispersion angulaire ADXRD (acronyme anglais de « *Angular Dispersive X-ray Diffraction* »). L'énergie est fixée par l'utilisation d'un rayonnement monochromatique et le nombre de photons diffractés est mesuré en fonction de l'angle. Bien que ces dispositifs soient très précis, ils nécessitent l'utilisation d'une source monochromatique puissante et ne peuvent être utilisés pour l'imagerie du fait de leur encombrement.

Développée plus récemment, la technique EDXRD (acronyme anglais de « *Energy Dispersive X-Ray Diffraction* ») permet de pallier ces difficultés. Elle consiste cette fois à travailler à angle fixe en utilisant un ensemble de collimateurs et à illuminer l'objet avec un faisceau polychromatique pour mesurer les photons diffractés avec un détecteur spectrométrique résolu en énergie. Les pics de diffraction apparaissent alors à certaines énergies dans le spectre mesuré.

La technique EDXRD, et de façon plus générale, toute technique d'analyse par spectrométrie, nécessite la mise en œuvre d'un détecteur spectrométrique suffisamment résolu en énergie pour permettre la séparation et l'identification des différents pics caractéristiques du matériau constitutif de l'objet à analyser. Les détecteurs connus présentant la meilleure résolution en énergie sont du type Germanium. Mais ce type de détecteur doit être refroidi à des températures très faibles, par des procédés complexes et/ou coûteux (refroidissement thermoélectrique ou par un réservoir d'azote liquide). Aussi, les dispositifs d'analyse mettant en œuvre un tel détecteur sont très encombrants.

L'émergence récente de détecteurs spectrométriques pouvant être utilisés à température ambiante, tels des détecteurs de type CdTe, CdZnTe, ou des matériaux scintillateurs, offre une alternative intéressante aux détecteurs Germanium. En effet, ces détecteurs sont compacts, non refroidis et moins onéreux. scintillateurs, offre une alternative intéressante aux détecteurs Germanium. En effet, ces détecteurs sont compacts, non refroidis et moins onéreux. Cependant, leurs performances en termes de résolution en énergie sont encore inférieures à celles obtenues avec les détecteurs Germanium, bien que correctes.

Pour savoir si une substance cristalline ou amorphe donnée est contenue dans un objet, il est donc connu de :

✓ irradier l'objet à l'aide d'un faisceau incident, émis par une source de rayonnement ionisant, de préférence collimaté par un collimateur primaire,

✓ capter le rayonnement diffracté à l'aide d'un dispositif de détection comprenant

♦ un détecteur, dit détecteur spectrométrique, apte à établir un spectre en énergie (ou spectre énergétique) du rayonnement diffusé selon un angle de diffusion donné, c'est-à-dire un détecteur comprenant

○ un matériau détecteur apte à interagir avec un rayonnement diffusé par l'objet et qui présente, du côté de l'objet, un plan dit plan de détection,
○ des moyens de mesure spectrométrique, aptes à mesurer une énergie libérée par chaque interaction d'un photon avec le matériau détecteur et à établir au moins un spectre en énergie.

♦ un collimateur, dit collimateur de détection, associé au détecteur, le détecteur et le collimateur de détection étant agencés de façon à présenter un axe de détection D formant, avec l'axe central Z du faisceau incident, un angle diffusion θ,

✓ analyser le ou les spectres mesurés par comparaison avec le spectre en énergie de la substance recherchée.

D'une façon générale, un spectre en énergie illustre la distribution de l'énergie d'un rayonnement sous la forme d'un histogramme représentant le nombre d'interactions de photon dans l'objet (en ordonnée) en fonction de l'énergie libérée (en abscisse). Souvent, l'axe des énergies est discrétisé en canaux de largeur 2 $\delta E$, un canal Ci, centré sur l'énergie Ei correspondant aux énergies comprises entre Ei-$\delta E$ et Ei+$\delta E$.

US 2009/0168958 décrit un dispositif pour la détection d'explosifs dans des bagages, comprenant une source de rayons X et deux détecteurs (dont un seul détecteur spectrométrique) ; les données mesurées sont utilisées pour déterminer le numéro atomique effectif, les potentiels intermoléculaires, la taille moléculaire ou la compacité du matériau analysé. US 2012/0133516 décrit un dispositif de détection de substances illicites ou dangereuses dans un objet, dans lequel une FIM est générée. WO 2006/075296 enseigne de mesurer les rayonnements transmis et diffusés par un matériau et de les utiliser indépendamment l'un de l'autre pour déterminer quatre paramètres : image tomographique de transmission, première section efficace différentielle de diffusion cohérente, seconde section efficace différentielle de diffusion cohérente, et section efficace totale de diffusion cohérente, lesquels paramètres sont ensuite comparés à des valeurs de référence pour l'identification du matériau. Enfin, US 5,428,657 décrit un dispositif dans lequel sont mesurés les rayonnements diffractés par diffraction Rayleigh et par diffusion Compton, les mesures de diffusion Compton étant utilisées pour corroborer les résultats fournis par les mesures de diffraction Rayleigh et vice versa, pour la détection, l'identification et la localisation d'un corps étranger dans une pièce de volaille.

La demande de brevet WO2013098520 décrit un dispositif d'analyse d'un matériau basé sur le traitement et l'analyse d'un spectre de diffusion.

L'invention est une amélioration d'un tel procédé d'analyse d'un spectre diffusé, permettant d'avoir une information plus précise quant à la signature de l'objet examiné.

Pour ce faire, l'invention propose un procédé d'analyse d'un objet à l'aide d'un système de détection comprenant un détecteur spectrométrique, le procédé comprenant les étapes suivantes :

- irradiation de l'objet par un rayonnement photonique incident, à l'aide d'une source de rayonnement électromagnétique ;
- acquisition d'un spectre énergétique, dit spectre en diffusion mesuré, diffusé par l'objet selon un angle θ donné compris entre 1° et 15°, à l'aide du détecteur spectrométrique, placé en diffusion,

Le procédé selon l'invention est caractérisé en ce qu'il comprend de plus les étapes suivantes :

- acquisition d'un spectre énergétique transmis par l'objet, dit spectre en transmission mesuré, à l'aide d'un détecteur spectrométrique placé en transmission ; le détecteur spectrométrique placé en transmission peut être celui utilisé pour acquérir le spectre en diffusion mesuré, et que l'on déplace, soit manuellement, soit de façon automatique à l'aide de moyens mécaniques et informatiques adaptés, entre ses deux opérations d'acquisition ; en variante on utilise un système de détection comprenant un détecteur spectrométrique additionnel, lequel est alors placé à demeure en transmission et est dédié aux acquisitions de spectres en transmission mesurés ;
- reconstruction d'une fonction, dite signature, représentative de l'objet, à partir à la fois du spectre en diffusion mesuré et du spectre en transmission mesuré et comme défini à la revendication 1 ;
- comparaison de la signature ainsi reconstruite à des signatures de matériaux étalons mémorisées dans une base de données, aux fins d'identification d'un matériau constitutif de l'objet.

L'invention repose donc sur l'utilisation combinée d'au moins un spectre en diffusion et un spectre en transmission. Cette combinaison permet d'obtenir une signature plus précise (pics de Bragg ou Fonction d'Interférence Moléculaire) d'un matériau constitutif de l'objet.

Avantageusement et selon l'invention, l'étape de reconstruction d'une signature de l'objet met en œuvre une méthode basée sur une approche de type problème inverse.

La mise en œuvre d'une méthode basée sur une approche de type problème inverse permet de restaurer la signature propre du matériau indépendamment des facteurs instrumentaux de manière à améliorer l'identification du matériau.

Avantageusement, l'étape de reconstruction d'une signature de l'objet comprend une opération de construction d'une matrice A de réponse globale du système de détection, chaque terme A(j,k) de la matrice de réponse globale A correspondant à une probabilité de détecter, avec le détecteur placé en diffusion, un photon d'énergie j lorsque l'objet produit un transfert de quantité de mouvement égal à k.

D'une façon générale la matrice de réponse globale A établit une relation entre une énergie détectée par le détecteur placé en diffusion et un paramètre caractéristique de diffusion élastique du matériau constituant l'objet analysé, en particulier le transfert de quantité de mouvement.

La matrice de réponse globale A est élaborée en prenant en compte :

- le spectre mesuré par le détecteur spectrométrique placé en transmission, dit spectre de transmission, ce spectre représentant du rayonnement émis par la source dans l'objet examiné,
- une fonction de réponse angulaire établissant une relation, pour un angle de diffusion donnée, entre l'énergie d'un rayonnement diffusé et un paramètre caractéristique de la diffusion élastique du rayonnement de l'objet, en particulier un transfert de quantité de mouvement.

La matrice de réponse A est élaborée en estimant le spectre du rayonnement de la source après atténuation par l'objet, un tel spectre étant estimé à partir du spectre de transmission, par exemple en utilisant une matrice de calibration du détecteur placé en transmission.

La matrice de réponse A est élaborée en prenant en compte une matrice de calibration du détecteur placé en diffusion

Dans un mode de réalisation préférentiel, le détecteur spectrométrique placé en diffusion est agencé de façon à présenter un axe de détection formant, avec un axe central du rayonnement incident, un angle de diffusion θ compris entre 1° et 10°, voire entre 1° et 5°.

Selon l'invention, l'étape de reconstruction d'une signature de l'objet comprend une étape d'estimation d'un spectre incident atténué par l'objet utilisant le spectre mesuré en transmission. Compte tenu du faible angle de diffusion, les inventeurs ont constaté que l'atténuation de l'objet, telle qu'elle transparaît dans le spectre de transmission, pouvait être avantageusement prise en compte lors du traitement du spectre de diffusion.
spectre de diffusion.

Dans un mode de réalisation préférentiel, le procédé d'analyse selon l'invention comprend une première étape préalable de calibrage d'une matrice de réponse du détecteur spectrométrique placé en diffusion, une seconde étape préalable de calibrage d'une matrice de réponse du détecteur spectrométrique placé en transmission, et une troisième étape préalable de calibrage d'une matrice de réponse angulaire du système de détection, ces première, deuxième et troisième étapes préalables de calibrage pouvant être effectuées dans un ordre ou dans un autre, avant toute irradiation d'un objet à analyser.

Les étapes préalables de calibrage des matrices de réponse du détecteur spectrométrique placé en diffusion et du détecteur spectrométrique placé en transmission ne sont pas nécessaires mais avantageuses, car elles prennent en compte la dégradation des spectres du fait de la réponse du détecteur. Cependant, ces étapes sont optionnelles, en particulier pour des détecteurs suffisamment résolus en énergie et lorsque la réponse d'un détecteur est jugée satisfaisante.

Dans un mode de réalisation préférentiel, les première et deuxième étapes préalables de calibrage sont effectuées par simulation à l'aide d'un logiciel de simulation du type Monte-Carlo.

La réponse d'un détecteur, qu'il s'agisse du détecteur utilisé en transmission ou du détecteur utilisé en diffusion, peut être affinée en exposant le détecteur à une source de rayonnement monochromatique ou comportant un faible nombre de raies d'émission, par exemple $^{241}$Am ou [57]Co.

Selon une caractéristique additionnelle possible, le spectre en transmission mesuré et le spectre en diffusion mesuré sont acquis lors d'une même opération d'irradiation de l'objet, sous réserve de disposer d'un système de détection comprenant deux détecteurs.

En variante et de préférence, le procédé d'analyse comprend deux parties exécutées en deux temps : une première partie au cours de laquelle le spectre en transmission mesuré est acquis et à l'issue de laquelle la réalisation d'un critère de suspicion est vérifiée, et une seconde partie au cours de laquelle le spectre en diffraction mesuré est acquis et la signature est reconstruite. Dans cette variante, on peut utiliser un système de détection à deux détecteurs ou un système de détection à détecteur unique (que l'on déplace d'une position à l'autre).

Plus précisément, la première partie d'un tel procédé en deux temps comprend les étapes suivantes :

✔ irradiation de l'objet et acquisition d'un spectre en transmission mesuré,
✔ détermination d'une première caractéristique de l'objet à partir du spectre en transmission mesuré ; cette première caractéristique de l'objet peut être une forme, une dimension, un contraste d'atténuation, un numéro atomique effectif $Z_{eff}$ d'un matériau constitutif de l'objet ;
✔ vérification de la réalisation d'au moins un critère de suspicion portant sur la première caractéristique de l'objet et traduisant le fait que l'objet contient un matériau potentiellement suspect pour une application considérée ; ainsi par exemple, dans le cas d'une application relevant du domaine de la sécurité telle que la recherche d'explosifs dans des bagages, le critère de suspicion traduit le fait que l'objet contient un matériau dont la première caractéristique s'approche de celle d'un matériau explosif ; dans le cas d'une application médicale telle que la recherche d'une tumeur dans un sein, le critère de suspicion traduit le fait que l'objet contient un matériau dont la première caractéristique est proche de celle d'un tissu cancéreux. Le critère de suspicion définit de préférence une plage de valeurs de la première caractéristique à l'intérieur de laquelle il est considéré que l'objet est potentiellement suspect eu égard à l'application considérée, et à l'extérieur de laquelle l'objet est considéré comme n'étant pas suspect. L'étape de vérification de la réalisation du critère de suspicion comprend alors une comparaison entre la première caractéristique déterminée pour l'objet et la plage de valeurs prédéterminée eu égard à l'application considérée.

Selon un exemple qui ne fait pas partie de la présente invention, la seconde partie du procédé en deux temps est exécutée uniquement lorsque le critère de suspicion est réalisé et comprend :

✔ irradiation de l'objet et acquisition d'un spectre en diffusion mesuré,

✔ reconstruction de la signature de l'objet à partir du spectre en diffusion mesuré (acquis lors de cette seconde partie) et du spectre en transmission mesuré (acquis au cours de la première partie), comme précédemment expliqué,

✔ comparaison de la première caractéristique de l'objet et de sa signature avec des caractéristiques et signatures de matériaux étalons mémorisées dans une base de données, aux fins d'identification d'un matériau constitutif de l'objet.

A l'inverse, lorsque le critère de suspicion n'est pas réalisé, selon cet exemple qui ne fait pas partie de l'invention, il est mis fin au procédé d'analyse de l'objet à la fin de la première partie : l'objet en cours d'analyse est considéré comme inoffensif et est retiré de la zone de réception d'objet

L'objectif de la première partie d'un tel procédé en deux temps n'est pas d'identifier le matériau constitutif de l'objet mais d'écarter les objets manifestement inoffensifs (absence certaine d'explosif ou absence certaine de tumeur ou autre tissu malsain, selon l'application concernée) afin de gagner du temps, la seconde partie du procédé (plus longue puisqu'elle nécessite l'acquisition d'un spectre en diffusion) n'étant effectuée que sur les objets potentiellement suspects. Le spectre en transmission mesuré est utilisé deux fois dans cette version du procédé selon l'invention : une première fois dans la première partie du procédé pour déterminer une caractéristique de l'objet (forme, dimension, numéro atomique effectif...) sur laquelle se fonde le critère de suspicion, et une seconde fois dans la seconde partie du procédé pour reconstruire la signature.

L'invention s'étend à un système de détection apte à mettre en œuvre le procédé selon l'invention, et en particulier à un système de détection pour l'analyse d'un objet comprenant :

- une source de rayonnement photonique,
- une zone de réception d'un objet à analyser,
- un détecteur spectrométrique placé en diffusion en aval de cette zone de réception d'objet, pour l'acquisition d'un spectre énergétique, dit spectre en diffusion mesuré, diffusé par l'objet selon un angle de diffusion θ compris entre 1° et 15°,

Le système de détection selon l'invention est caractérisé en ce qu'il comprend :

- un spectre énergétique transmis par l'objet, dit spectre en transmission mesuré, qui peut être acquis soit par un détecteur spectrométrique additionnel placé en transmission en aval de la zone de réception d'objet, soit par le détecteur mentionné au paragraphe précédent (servant à l'acquisition du spectre en diffusion mesuré) et préalablement placé en transmission,
- des moyens informatiques de traitement comprenant des moyens de reconstruction d'une fonction, dite signature, représentative de l'objet, à partir du spectre en diffusion mesuré et du spectre en transmission mesuré et comme indiqué à la revendication 10, et des moyens de comparaison de la signature reconstruite à des signatures de matériaux étalons mémorisées dans une base de données aux fins d'identification d'un matériau constitutif de l'objet.

Le système de détection selon l'invention présente de plus, de préférence, une ou plusieurs des caractéristiques suivantes :
Le système de détection selon l'invention présente de plus, de préférence, une ou plusieurs des caractéristiques suivantes :

✔ Il comprend un détecteur spectrométrique additionnel placé en transmission tel que précédemment évoqué.
✔ Les moyens informatiques de traitement sont aptes à mettre en œuvre une méthode basée sur une approche de type problème inverse.
✔ Les moyens informatiques de traitement sont aptes à estimer une matrice de réponse globale (A) du système de détection à partir d'une matrice de réponse calibrée du détecteur spectrométrique placé en diffusion et d'une matrice de réponse calibrée du détecteur spectrométrique placé en transmission.
✔ La source de rayonnement est polychromatique.
✔ La source de rayonnement est une source de rayons X.
✔ Le détecteur spectrométrique placé en diffusion est configuré de façon à présenter un axe de détection formant, avec un axe central du rayonnement incident, un angle de diffusion θ compris entre 1 ° et 10° et de préférence entre 1° et 5°.
✔ Le système de détection comprend un premier collimateur, dit collimateur de source, placé entre la source de rayonnement photonique et la zone de réception d'objet, de façon à collimater le rayonnement émis par la source selon un axe central incident Z.
✔ Le système de détection comprend un deuxième collimateur, dit collimateur de diffusion, entre la zone de réception d'objet et le détecteur spectrométrique placé en diffusion, le collimateur de diffusion ayant un axe central de collimation D formant un angle de diffusion θ avec l'axe central incident Z, lequel angle de diffusion θ est de préférence compris entre 1° et 5°.

✔ Les détecteurs spectrométriques utilisés sont des capteurs à conversion directe, à savoir que les photons X incidents sur le capteur sont absorbés par un semi-conducteur (CdTe par exemple) et créent un nuage de charges électroniques (typiquement 10000 électrons pour un photon X de 60 keV). Ces charges sont ensuite collectées par des électrodes et forment un signal électrique transitoire appelé impulsion. Si la collecte est complète, l'intégrale de l'impulsion mesurée pour chaque particule détectée est proportionnelle à son énergie déposée dans le semi-conducteur. Un circuit électronique permet de mesurer cette intégrale. Après numérisation, les différentes mesures de photons de même énergie sont sommées, ce qui permet de reconstruire le spectre des rayonnements X ayant interagi avec l'objet irradié.

✔ Les moyens informatiques de traitement comprennent

♦ des moyens de détermination d'une première caractéristique de l'objet à partir du spectre en transmission mesuré,

♦ et des moyens de vérification d'un critère de suspicion portant sur la première caractéristique précédemment déterminée pour l'objet et traduisant le fait que l'objet contient un matériau potentiellement suspect pour une application considérée, par exemple par comparaison de la première caractéristique avec une plage de valeurs prédéfinie eu égard à l'application concernée.

L'invention s'étend à un système de détection et à un procédé d'analyse d'un objet caractérisés en combinaison par tout ou partie des caractéristiques mentionnées ci-avant et ci-après.

D'autres détails et avantages de la présente invention apparaîtront à la lecture de la description suivante, qui se réfère aux dessins schématiques annexés et porte sur des modes de réalisation préférentiels, fournis à titre d'exemples non limitatifs. Sur ces dessins :

✔ La figure 1 est un graphique représentant les pics de Bragg du TNT (trinitrotoluène) et du sel (NaCl), lesquels pics illustrent l'intensité normalisée (axe des ordonnées), c'est-à-dire le nombre relatif de photons détectés au cours d'une opération d'acquisition, en fonction du transfert de quantité de mouvement x (axe des abscisses) en $nm^{-1}$ des photons détectés.

✔ La figure 2 est un graphique représentant la fonction d'interférence moléculaire normalisée de l'eau, la fonction d'interférence moléculaire normalisée de l'eau oxygénée ($H_2O_2$), la fonction d'interférence moléculaire normalisée de l'acétone ($C_2H_6CO$), et la fonction d'interférence moléculaire normalisée du plexiglas® (($C_5O_2H_8$)n), avec, en ordonnées, le nombre de photons détectés et, en abscisses, le transfert de quantité de mouvement x en $nm^{-1}$.

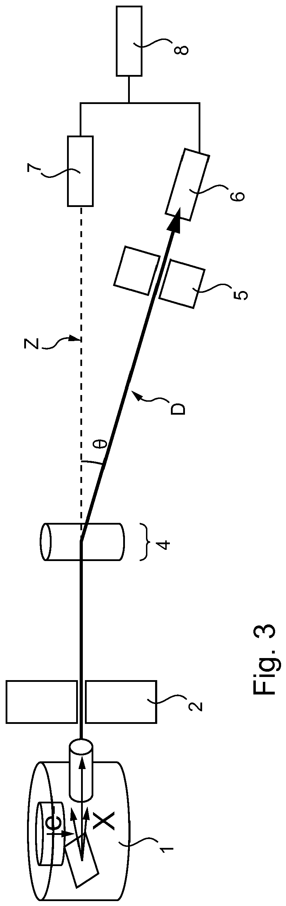

✔ La figure 3 est une vue schématique d'un système de détection selon l'invention.

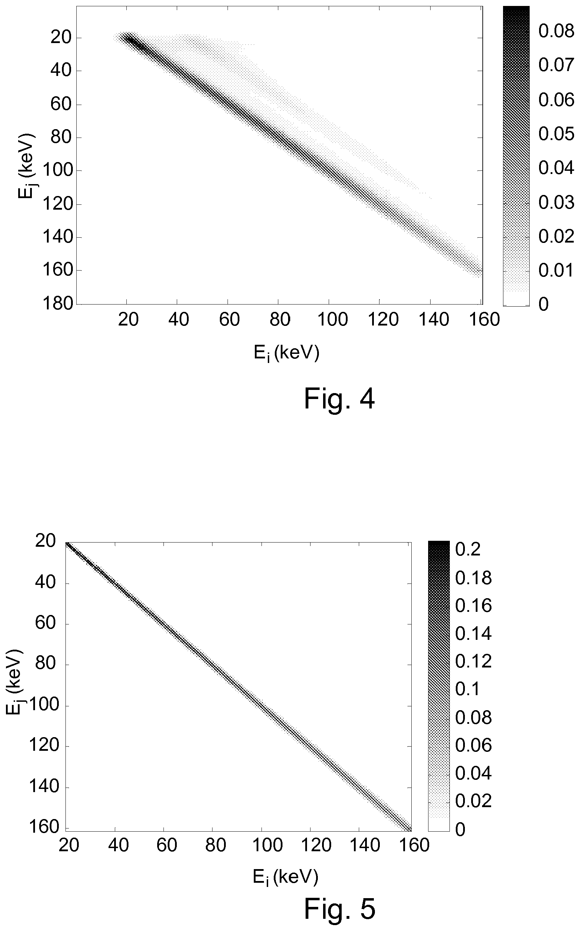

✔ La figure 4 est un graphique représentant la matrice de réponse du détecteur spectrométrique placé en transmission d'un système de détection selon l'invention tel celui de la figure 3.

✔ La figure 5 est un graphique représentant la matrice de réponse du détecteur spectrométrique placé en diffusion du système de détection de la figure 3.

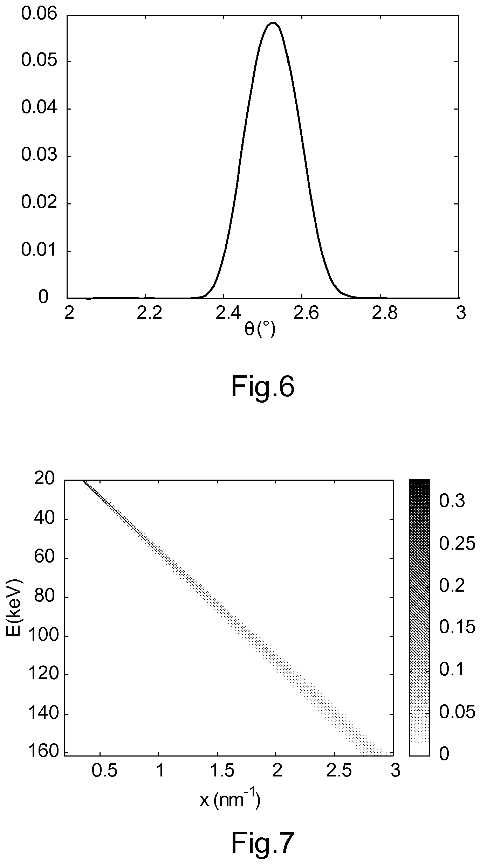

✔ La figure 6 est un graphique représentant la distribution angulaire du détecteur spectrométrique placé en diffusion du système de détection de la figure 3.

✔ La figure 7 est un graphique représentant la matrice de résolution angulaire du système de détection de la figure 3.

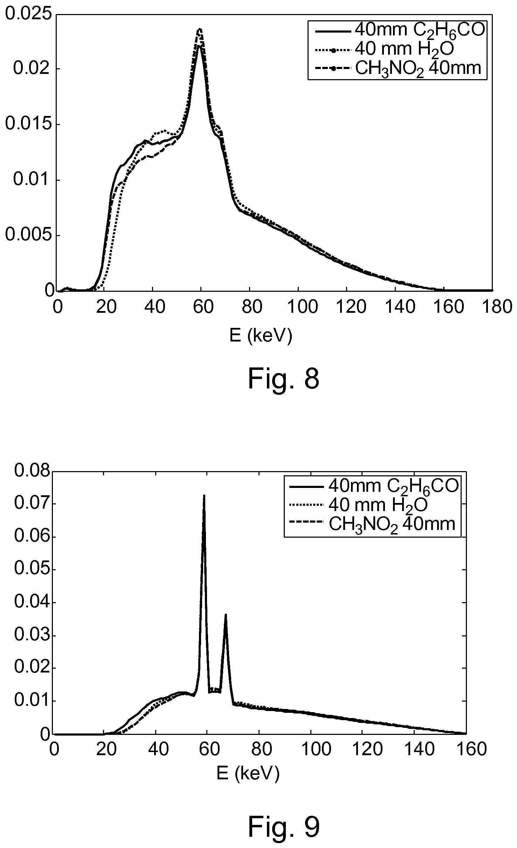

✔ La figure 8 est un graphique représentant des spectres en transmission pour des échantillons cylindriques de 40mm de diamètre d'acétone ($C_2H_6CO$), d'eau ($H_2O$) et de nitrométhane ($CH_3NO_2$), tels que mesurés par le détecteur spectrométrique placé en transmission du système de détection de la figure 3.

✔ la figure 9 est un graphique représentant des spectres incidents atténués estimés pour des échantillons cylindriques de 40mm de diamètre d'acétone, d'eau et de nitrométhane, tels qu'estimés selon l'invention à partir des spectres en transmission mesurés de la figure 8.

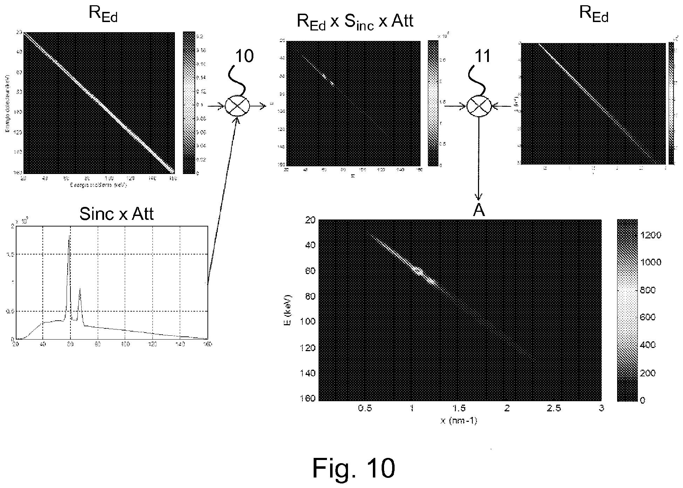

✔ La figure 10 est un digramme illustrant une opération de construction d'une réponse globale d'un système de détection selon l'invention tel celui de la figure 3.

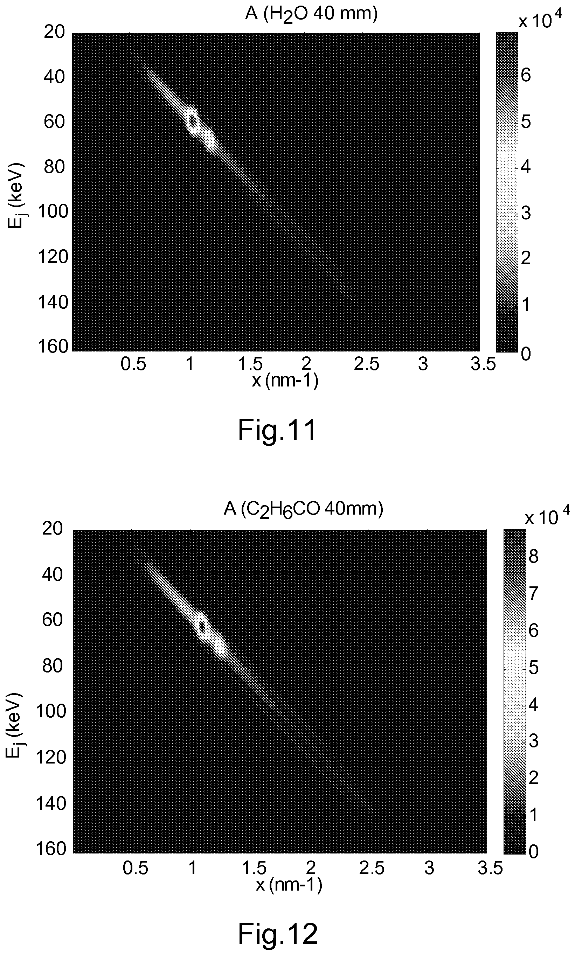

✔ la figure 11 est un graphique représentant la matrice de réponse globale A du système de détection de la figure 3 pour un échantillon cylindrique d'eau de 40 mm de diamètre.

✔ la figure 12 est un graphique représentant la matrice de réponse globale A du système de détection de la figure 3 pour un échantillon cylindrique d'acétone de 40 mm de diamètre.

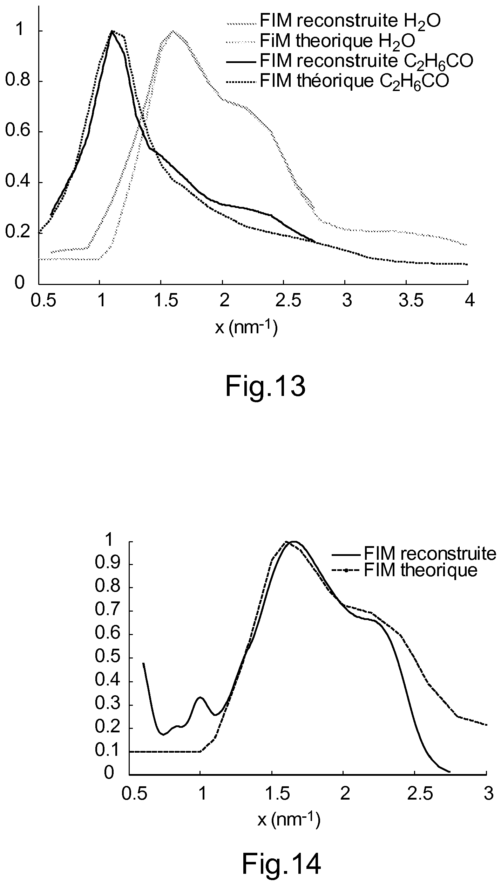

✔ La figure 13 est un graphique représentant d'une part la signature de diffusion (FIM) théorique d'un échantillon cylindrique d'eau de 40 mm de diamètre, et la signature de cet échantillon telle que reconstruite à partir d'un procédé et d'un système de détection selon l'invention et, d'autre part, la signature de diffusion (FIM) théorique d'un échantillon cylindrique d'acétone de 40 mm de diamètre, et la signature de cet échantillon telle que reconstruite à partir d'un procédé et d'un système de détection selon l'invention

✓ La figure 14 est un graphique représentant la signature de diffusion (FIM) théorique d'un échantillon d'eau et la signature de cet échantillon reconstruite à partir d'un spectre en diffusion mesuré pour l'échantillon et en utilisant un procédé et un système de détection selon l'invention.

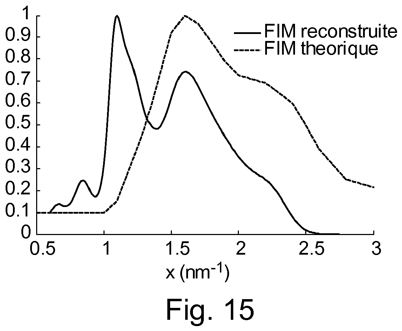

✓ La figure 15 est un graphique représentant la signature de diffusion (FIM) théorique d'un échantillon d'eau et la signature de cet échantillon reconstruite à partir d'un spectre en diffusion mesuré pour l'échantillon sans prise en compte de l'atténuation du spectre incident.

Le système de détection selon l'invention illustré à la figure 3 comprend :

♦ une source 1 polychromatique de rayonnements ionisants, telle qu'un tube à rayons X,

♦ un collimateur de source 2, qui permet de canaliser les rayonnements de la source 1 en un faisceau incident d'axe central incident Z,

♦ une zone 4 de réception d'un objet à analyser,

♦ un collimateur de diffusion 5 ayant un axe de collimation D,

♦ un détecteur spectrométrique 6 placé en diffusion, associé au collimateur de diffusion 5 de sorte que le détecteur 6 détecte un rayonnement diffracté selon un angle de diffusion θ (angle entre l'axe incident Z et l'axe de collimation et de détection D) par exemple égal à 2,5° (l'échelle n'étant pas respectée sur la figure 3) ; le détecteur spectrométrique 6 placé en diffusion est apte à établir un spectre (énergétique) en diffusion mesuré, c'est-à-dire un spectre en énergie du rayonnement diffracté par l'objet selon la direction D ; de préférence, le détecteur spectrométrique 6 placé en diffusion est un détecteur à matériau semi-conducteur, tel un détecteur à CdTe ou CdZnTe ;

♦ un détecteur spectrométrique 7 placé en transmission, apte à établir un spectre (énergétique) en transmission mesuré, c'est-à-dire un spectre en énergie du rayonnement transmis par l'objet selon la direction Z ; de préférence, le détecteur spectrométrique 7 placé en transmission est un détecteur à matériau semi-conducteur, tel un détecteur à CdTe ou CdZnTe ;

♦ des moyens informatiques 8 de traitement des spectres mesurés fournis par les détecteurs spectrométriques 6 et 7.

Les termes « rayonnement transmis » désignent le rayonnement constitué de photons n'ayant subi aucune interaction dans l'objet examiné. Par « spectre en transmission », on entend le spectre du rayonnement transmis selon l'axe du faisceau incident à l'objet, constitué par les photons qui n'ont subi aucune interaction dans l'objet. L'expression « placé en transmission » désigne un détecteur apte à détecter le rayonnement transmis par le matériau. Ainsi, un détecteur placé en transmission est situé sur l'axe du rayonnement incident à l'objet, l'objet étant placé entre le détecteur et la source de rayonnement.

Par « détecteur spectrométrique », on entend un détecteur apte à générer un spectre du rayonnement détecté.

Le procédé selon l'invention vise à fournir une signature d'un matériau constituant l'objet à analyser à partir d'un spectre en diffusion mesuré (fourni par le détecteur spectrométrique 6), le terme « *signature* » désignant une fonction représentative du matériau en diffusion : pics de Bragg ou Fonction d'Interférence Moléculaire selon la nature -cristalline ou amorphe- du matériau.

Ce procédé utilise de préférence le modèle suivant, décrivant la relation entre la signature $f$ du matériau et le spectre en diffusion mesuré $g$ :

$$g = \left( R_{Ed} \times S_{inc} \times Att \right) \cdot R_{\theta} \cdot f = A \cdot f$$

Avec

- $g$ : le vecteur du spectre en diffusion (cohérente) mesuré, de taille ($Nb_{Ejd}$ x 1)

- $R_{Ed}$ : matrice de réponse du détecteur spectrométrique placé en diffusion, de taille ($Nb_{Ejd}$ x $Nb_{Ei}$). Dans le cas d'un détecteur parfait, cette matrice est une matrice diagonale. Chaque terme $R_{Ed}$ (j,i) de la matrice représente la probabilité de détection d'une valeur d'énergie égale à j sachant que le rayonnement incident au détecteur a une énergie égale à i. D'une façon générale, la matrice de réponse d'un détecteur spectrométrique établit une relation probabiliste entre une énergie détectée par le détecteur et l'énergie du rayonnement incident à ce détecteur. Chaque colonne i de $R_{Ed}$ (j,i), avec j variant de 1 à $Nb_{Ejd}$, correspond à la densité de probabilité d'énergie détectée par le détecteur lorsque ce dernier est soumis à un rayonnement incident d'énergie i.

- $S_{inc}$ : vecteur du spectre incident du tube à rayons X de taille (1 x $Nb_{Ei}$) ;

- *Att* : vecteur d'atténuation de taille (1 x Nb$_{Ei}$) qui prend en compte les effets d'atténuation dans l'objet. Du fait de la faible valeur de l'angle $\theta$, inférieur à 15°, et de préférence inférieur à 10°, on fera l'approximation que l'atténuation par l'objet le long du trajet vers les deux détecteurs (en diffusion et en transmission) est la même.

- $R_\theta$ : matrice de réponse angulaire du système de détection, de taille (Nb$_{Ei}$ x Nb$_x$). Chaque terme $R_\theta$(j,k) de la matrice $R_\theta$ correspond à une probabilité que l'énergie d'un photon détecté à l'énergie j corresponde à un transfert de quantité de mouvement égal à k . Autrement dit, $R_\theta$(j, k) correspond à la probabilité qu'un transfert de quantité de mouvement k donne lieu à la détection d'un photon d'énergie j. Chaque colonne k $R_\theta$(j,k), avec j variant de 1 à NbE$_{jd}$, correspond à la densité de probabilité d'énergie détectée par le détecteur lors d'un transfert de quantité de mouvement égal à k. D'une façon plus générale, la matrice de réponse angulaire $R_\theta$ permet d'établir une relation probabiliste entre l'énergie détectée par le détecteur placé en diffusion et un paramètre de diffusion élastique d'un matériau constituant l'objet, en particulier un transfert de quantité de mouvement.

- *f* : signature, de taille (1 x Nb$_x$), propre au matériau constituant l'objet, et qui permet de décrire soit les pics de Bragg théoriques du matériau dans le cas d'un matériau cristallin, soit la fonction d'interférence moléculaire dans le cas d'un matériau amorphe ;

- *A* : matrice de réponse globale du système en diffusion, de taille (Nb$_{Ejd}$ x Nb$_x$). chaque terme A(j,k) de A correspond à une probabilité que l'énergie d'un photon détecté, par le détecteur en diffusion, à l'énergie j corresponde à un transfert de quantité de mouvement égal à k . Autrement dit, A(j,k) correspond à la probabilité qu'un transfert de quantité de mouvement k donne lieu à la détection d'un photon à l'énergie j.

- Le symbole « *x* » correspond à un produit terme à terme ($S_{inc}$ et *Att* sont multipliés terme à terme, on obtient alors un vecteur qui fait la même taille) ;

- Le symbole « . » correspond au produit matriciel classique ;

- Nb$_{Ejd}$, Nb$_{Ei}$ et Nb$_x$ correspondent respectivement au nombre de canaux du spectre en diffusion mesuré (c'est-à-dire au nombre de canaux du spectre de l'énergie détectée par le détecteur placé en diffusion), au nombre de canaux du spectre de l'énergie incidente et au nombre de canaux du vecteur décrivant le transfert de quantité de mouvement.

A noter que le nombre de photons détectés dans chaque canal du vecteur g suit une loi de Poisson de paramètre le nombre moyen de photons dans ce canal.

L'originalité du procédé selon l'invention est qu'il utilise un spectre en transmission mesuré (fourni par le détecteur spectrométrique 7), dont le modèle direct est le suivant :

$$h = R_{Et} \cdot \left( S_{inc} \times Att \right)$$

Avec

- *h* : le vecteur du spectre en transmission mesuré de taille (Nb$_{Ejt}$ x 1)
- $R_{Et}$ : la matrice de réponse du détecteur spectrométrique placé en transmission, de taille (Nb$_{Ejt}$ x Nb$_{Ei}$). Dans le cas d'un détecteur parfait, cette matrice est une matrice diagonale. Chaque terme $R_{Et}$(j,i) de la matrice représente la probabilité de détection d'une valeur d'énergie égale à j lorsque le photon incident au détecteur a une énergie i.
- $S_{inc}$ : le vecteur du spectre incident du tube à rayons X de taille (1 x Nb$_{Ei}$)
- *Att* : le vecteur d'atténuation de taille (1 x Nb$_{Ei}$) qui prend en compte les effets d'atténuation dans l'objet,
- Le vecteur *($S_{inc}$ x Att)* représente le spectre de la source de rayonnement atténuée par l'objet. Selon l'invention, un des éléments clefs est de prendre en compte ce vecteur dans la construction de la matrice de réponse A du système.
- Nb$_{Ejt}$, Nb$_{Ei}$ correspondent respectivement au nombre de canaux du spectre en en transmission mesuré (c'est-à-dire au nombre de canaux du spectre de l'énergie détectée par le détecteur placé en transmission) et au nombre de canaux du spectre de l'énergie incidente.
- Le symbole *x* correspond à un produit terme à terme ($S_{inc}$ et *Att* sont multipliés terme à terme, on obtient alors un vecteur qui fait la même taille).
- Le symbole. correspond au produit matriciel classique.

Le procédé selon l'invention comprend une opération de construction de la matrice de réponse globale A du système de détection, utilisant le modèle ci-dessus.

Pour ce faire, il convient au préalable de déterminer les termes $R_{\theta}$ $(S_{inc}$ x Att) et, de façon optionnelle, $R_{Ed}$.

Chacune de ces étapes est individuellement décrite plus loin.

Une fois la matrice de réponse globale A construite à l'aide du modèle susmentionné, le procédé selon l'invention reconstruit la signature $f$ (fonction d'interférence moléculaire pour les amorphes, distribution des $d_{hkl}$ pour les polycristallins) à partir du modèle $g = A \cdot f$ (où $A$ et $g$ sont alors connus) en mettant en œuvre une méthode basée sur une approche de type problème inverse.

L'algorithme Maximum Likelihood - Expectation Maximization (ML-EM) se propose d'estimer le spectre à calculer par maximisation itérative de la fonction de log-vraisemblance. Ce type de calcul est très fréquent dès lors qu'il s'agit d'estimer un maximum de vraisemblance, et fait appel à un algorithme plus général, appelé Expectation - Maximization (EM). Cette méthode a l'avantage de prendre en compte la nature poissonienne des données mesurées.

Les coefficients de la matrice de réponse globale A du système sont notés $a_{i,j}$. On veut maximiser la probabilité que l'estimée $f$ de dimension $Nb_x$ génère les mesures $g$. On sait de plus que les données mesurées obéissent à une statistique de Poisson, de par leur nature physique. On peut donc écrire la fonction de vraisemblance de l'estimée $f$ :

$$\Pr(g/f) = \prod_{j=1}^{Nb_{Ejd}} \frac{e^{-\sum_{k=1}^{Nbx} a_{j,k} f_k} \left(\sum_{k=1}^{Nbx} a_{j,k} f_k\right)^{g_j}}{g_j!}$$

Sa log-vraisemblance s'exprime alors:

$$\Phi(f) = log \Pr(g/f) = \sum_{j=1}^{Nb_{Ejd}} \left( -\sum_{k=1}^{Nbx} a_{j,k} f_k + g_j log \left(\sum_{k=1}^{Nbx} a_{j,k} f_k\right) \right)$$

On cherche ensuite à maximiser cette fonction, en annulant sa dérivée :

$$f_k \frac{\partial \phi(f)}{\partial f_k} = 0$$

La résolution itérative de ce problème s'écrit alors, n désignant l'itération :

$$f_k^{n+1} = f_k^n \frac{1}{\sum_{j=1}^{Nb_{Ejd}} a_{j,k}} \sum_{j=1}^{Nb_{Ejd}} \left( \frac{g_j a_{j,k}}{\sum_{k'=1}^{Nbx} a_{j,k'} f_{k'}^n} \right)$$

En initialisant le vecteur $f^{(0)}_k$ avec des valeurs positives, on a la garantie d'avoir des résultats non-négatifs.

Ainsi, à partir d'une estimation de $A$ et de la mesure de $g$, on peut reconstruire $f$ en itérant l'algorithme MLEM.

En d'autres termes, à partir de mesures réalisées en transmission et en diffusion sur un objet inconnu, on peut reconstruire une fonction (à savoir une fonction d'interférence moléculaire dans le cas d'un matériau amorphe ou des pics de Bragg dans le cas d'un matériau cristallin) relative à la structure d'un matériau constitutif de l'objet. Les valeurs de cette fonction sont représentées dans la matrice A.

Ce matériau étant inconnu, l'objectif est alors de l'identifier.

Pour ce faire, on utilise un ensemble de matériaux étalons (de type explosifs et non explosifs dans le cas d'une application d'analyse de bagages par exemple ; de type tissus biologiques sain et tissus malins dans le cas d'une application d'analyse médicale) dont les signatures sont tabulées et mémorisées dans une base de données, et le procédé d'analyse selon l'invention consiste ensuite à comparer les valeurs obtenues pour l'objet à analyser avec celles de la base de données, pour identifier l'objet inconnu.

En variante, certains paramètres permettant de remonter à des paramètres structurels du matériau sont extraits de la signature reconstruite pour l'objet ; par exemple, dans le cas d'un matériau cristallin, l'extraction de la position des pics présents dans la signature obtenue permet de remonter aux distances inter-réticulaires du cristal.

Sont maintenant décrites les diverses étapes de l'opération de construction de la matrice de réponse globale A du système.

Préalablement à toute analyse d'un objet, c'est-à-dire « *off-line* », des opérations de calibrage sont réalisées pour déterminer certaines spécifications du système de détection, qui dépendent notamment des détecteurs utilisés et de la géométrie du système, et qui, contrairement aux vecteurs d'atténuation, ne dépendent pas de l'objet à analyser. Ces spécifications sont $R_{Et}$, $R_{Ed}$, $R_\theta$. Elles sont ensuite mémorisées dans les moyens informatiques 8 de traitement.

La matrice de réponse $R_{Et}$ du détecteur spectrométrique placé en transmission peut être obtenue à partir du logiciel de simulation Monte-Carlo Tasmania, qui permet de simuler toute la chaîne de détection d'un détecteur semi-conducteur (interactions photon, transit des porteurs de charges...). De préférence, cette simulation est de plus confrontée à des données expérimentales acquises par exemple avec des sources gamma. Ceci permet d'ajuster la résolution en énergie obtenue en simulation.

La figure 4 montre la matrice de réponse $R_{Et}$ calibrée pour le détecteur spectrométrique 7 placé en transmission. Cette matrice définit la probabilité de détecter un photon à l'énergie Ej alors que l'énergie incidente du photon est Ei. Cette probabilité est indiquée sur la figure 4 par une nuance de gris (dont l'échelle est reportée à droite du graphique), l'axe des abscisses du graphique représentant l'énergie incidente Ei exprimée en keV, l'axe des ordonnées correspondant à l'énergie détectée Ej exprimée en keV. Dans le cas d'un détecteur parfait, la matrice est diagonale (si elle est carrée).

De façon similaire, une opération préalable de calibrage d'une matrice de réponse $R_{Ed}$ du détecteur spectrométrique 6 placé en diffusion est exécutée « *off-line* », par simulation à l'aide du logiciel de simulation Monte-Carlo et/ou par expérimentation.

La matrice de réponse calibrée $R_{Ed}$ obtenue est illustrée à la figure 5. Là encore, l'axe des abscisses représente l'énergie incidente en keV, l'axe des ordonnées correspond à l'énergie détectée en keV, la probabilité du couple (Ei, Ej) étant traduite par une nuance de gris.

Est aussi exécutée « *off-line* », une opération préalable de calibrage d'une matrice de réponse angulaire $R_\theta$ du système de détection. Cette réponse angulaire dépend de la géométrie du système d'acquisition et plus précisément à l'ouverture du collimateur de source 2 et à l'ouverture du collimateur de diffusion 5 sachant qu'on suppose que l'objet remplit l'intersection de deux cônes, à savoir un cône d'irradiation et un cône d'observation. Le cône d'irradiation est défini par l'angle solide sous lequel la source irradie l'objet, tandis que le cône d'observation est défini par l'angle solide sous lequel le détecteur « voit » l'objet.

On évalue tout d'abord une distribution angulaire 1D du système, soit à partir de simulations, soit à partir de calibrages. Utilisant la relation liant x (transfert de quantité de mouvement), E (énergie incidente au détecteur placé en diffusion) et θ (angle de diffusion), on déduit la matrice de réponse angulaire fonction de Ei (Energie incidente) et de *x* à partir de la distribution angulaire 1D fonction de θ.

La figure 6 montre un exemple de distribution angulaire 1D du système de diffusion lorsque l'axe de collimation D du collimateur de diffusion définit un angle de diffusion θ égal à 2,5°, la distribution angulaire exprimant la quantité relative de photons incidents au détecteur placé en diffusion (axe des ordonnées) en fonction de l'angle de détection en degré (axe des abscisses). Il s'agit d'un exemple car l'utilisation de collimateurs présentant des configurations différentes (en particulier largeur et longueur de l'ouverture des collimateurs) conduirait à l'obtention d'un autre graphique. Une matrice de réponse angulaire $R_\theta$ du système de détection peut être observée à la figure 7, dont l'axe des abscisses représente le transfert de quantité de mouvement x en nm$^{-1}$, tandis que l'axe des ordonnées représente l'énergie E incidente au détecteur placé en diffusion en keV, des nuances de gris traduisant la quantité relative de photons incidents. Comme précédemment évoqué, cette matrice définit une relation probabiliste entre le nombre de photons incidents au détecteur placé en diffusion, à une énergie donnée, et le transfert de quantité de mouvement.

La construction de la réponse globale A du système de détection utilisant le modèle $A = (R_{Ed} \times S_{inc} \times Att) \cdot R_\theta$ nécessite encore une étape d'estimation d'un spectre incident atténué par l'objet *(Sinc x Att)*.

Avantageusement et selon l'invention, cette étape d'estimation du spectre incident atténué utilise un spectre en transmission mesuré par un détecteur spectrométrique placé en transmission. Un tel spectre en transmission *h* peut s'écrire :

$$h = R_{Et} \cdot \left( S_{inc} \times Att \right)$$

En d'autres termes, il est considéré, selon l'invention, que le terme *(Sine x Att)* dans l'expression de la matrice A est égal au terme *($S_{inc}$ x Att)* dans l'expression du spectre en transmission. Les inventeurs ont démontré que cette approximation est tout à fait acceptable pour une diffusion à de petits angles (inférieurs à 15°) et qu'elle permet d'obtenir des signatures *f* d'une résolution et d'une précision excellentes pour des angles de diffusion compris entre 1° et 5°.

Pour estimer *($S_{inc}$ x Att)* à partir du spectre en transmission mesuré *h* et de la matrice $R_{Et}$ calibrée de réponse du détecteur 7, le système selon l'invention utilise avantageusement à nouveau une technique de type MLEM.

La figure 9 montre différents spectres $(S_{inc} \times Att)$ obtenus après inversion MLEM des données expérimentales enregistrées sur le détecteur spectrométrique 7 placé en transmission, lesquelles données (spectres en transmission mesurés) sont illustrées à la figure 8, pour un échantillon cylindrique de 40 mm de diamètre constitué respectivement d'eau ($H_2O$), d'acétone ($C_2H_6CO$), de nitrométhane ($CH_3NO_2$).

Tous les termes de la matrice de réponse globale $A$ du système ont été calibrés, le procédé selon l'invention pris en exemple consiste ensuite à les combiner selon la formule $A = (R_{Ed} \times S_{inc} \times Att) \cdot R_\theta$ Cette combinaison est résumée à la figure 10 où la référence numérique 10 désigne une multiplication ligne à ligne et où la référence numérique 11 désigne une multiplication matricielle.

Le procédé selon l'invention utilise un détecteur placé en transmission qui est un détecteur spectrométrique. Par souci d'économie ou pour limiter les temps d'acquisition, on pourrait être tenté d'utiliser en lieu et place de ce détecteur spectrométrique un simple détecteur à intégration permettant d'enregistrer le nombre de photons transmis au travers de l'objet (indépendamment de l'énergie libérée). La matrice de réponse globale du système de détection pourrait alors s'écrire $A = k \cdot R_{Ed} \cdot R_\theta$ où k serait donné par le signal en intégration délivré par le détecteur placé en transmission.

Les inventeurs ont démontré que cette solution est à proscrire.

La figure 14 reproduit la signature (fonction d'interférence moléculaire) théorique pour un échantillon d'eau et la signature f obtenue pour ce même échantillon d'eau selon l'invention, c'est-à-dire en utilisant un détecteur spectrométrique placé en transmission et en utilisant, en l'espèce, le modèle donné par la formule $A = (R_{Ed} \times S_{inc} \times Att) \cdot R_\theta$ ainsi qu'un algorithme MLEM avec 100 itérations pour l'inversion de $g = A \cdot f$. On peut constater que les deux courbes coïncident plus ou moins sur une grande partie du domaine de transfert de quantité de mouvement représenté.

La figure 15 reproduit la signature théorique de l'échantillon d'eau et la signature obtenue pour ce même échantillon en utilisant un détecteur à intégration placé en transmission et en utilisant le modèle donné par la formule $A = k \cdot R_{Ed} \cdot R_\theta$. On peut constater que les deux courbes sont très différentes sur l'ensemble du domaine de transfert de quantité de mouvement représenté et que la signature ainsi reconstruite fait apparaître des pics qui n'existent pas dans la signature théorique, de sorte qu'il n'est pas possible à partir de la signature ainsi reconstruite de déduire que l'échantillon est constitué d'eau.

À l'inverse, l'invention n'est pas limitée au modèle fourni dans l'exemple préférentiel décrit précédemment pour la construction de la matrice de réponse globale A système de détection.

Ainsi par exemple, il peut être envisagé d'utiliser directement le spectre en transmission mesuré sans l'inverser pour construire la matrice de réponse globale A. On a dans ce cas :

$$A = \left(R_{Ed} \times h\right) \cdot R_\theta = \left(R_{Ed} \times \left(R_{Et} \cdot \left(S_{inc} \times Att\right)\right)\right) \cdot R_\theta$$

Cette variante est conforme à l'invention bien que fournissant des résultats imparfaits. Cependant, l'inversion du spectre en transmission mesuré dans l'exemple préférentiel précédemment décrit, pour enlever l'effet de la réponse du détecteur, permet d'améliorer fortement les résultats de reconstruction de la signature et de s'approcher au mieux de la signature de diffusion théorique de l'objet (cf. figures 13 et 14).

## Revendications

1. Procédé d'analyse d'un objet à l'aide d'un système de détection comprenant un détecteur spectrométrique (6), le procédé comprenant les étapes suivantes :

    - irradiation de l'objet par un rayonnement photonique incident,
    - acquisition d'un spectre énergétique, dit spectre en diffusion mesuré, diffusé par l'objet selon un angle de diffusion ($\theta$) compris entre 1° et 15° à l'aide du détecteur spectrométrique (6) placé en diffusion,

    **caractérisé en ce qu'**il comprend de plus les étapes suivantes :

    - acquisition d'un spectre énergétique transmis par l'objet selon l'axe du rayonnement incident, dit spectre en transmission mesuré, à l'aide d'un détecteur spectrométrique (7) placé en transmission,
    - reconstruction d'une fonction (*f*), dite signature, représentative de l'objet, à partir à la fois du spectre en diffusion mesuré (g) et du spectre en transmission mesuré (h), cette étape comprenant une opération de construction d'une matrice de réponse globale (*A*) du système de détection qui établit une relation entre une énergie détectée par le détecteur spectrométrique placé en diffusion et un transfert de quantité de mouvement, la matrice de réponse globale (*A*) étant construite à partir d'une matrice de réponse angulaire calibrée ($R_\theta$) du système de

détection, d'un spectre incident atténué par l'objet ($S_{inc}$ x Att) estimé en utilisant le spectre en transmission mesuré (h), d'une matrice de réponse ($R_{Ed}$) du détecteur spectrométrique (6) placé en diffusion et d'une matrice de réponse ($R_{Et}$) du détecteur spectrométrique (7) placé en transmission, selon les équations suivantes :

$$h = R_{et} \cdot (S_{inc} \times A_{tt})$$

$$g = (R_{ed} \times S_{inc} \times A_{tt}) \cdot R_{\theta} \cdot f = A \cdot f\,'$$

ou directement selon l'approximation :

$$A = \left(R_{Ed} \times \left(R_{Et} \cdot \left(S_{inc} \times Att\right)\right)\right) \cdot R_{\theta}$$

étant précisé que chaque terme $R_{\theta}$ (j,k) de la matrice de réponse angulaire ($R_{\theta}$) du système de détection correspond à la probabilité qu'un transfert de quantité de mouvement k donne lieu à la détection d'un photon d'énergie j, que chaque terme $R_{Ed}$ (j,i) de la matrice de réponse ($R_{Ed}$) du détecteur spectrométrique (6) placé en diffusion représente la probabilité de détection d'une valeur d'énergie égale à j sachant que le rayonnement incident au détecteur a une énergie égale à i, et que de même chaque terme $R_{Et}$ (j,i) de la matrice de réponse ($R_{Et}$) du détecteur spectrométrique (7) placé en transmission représente la probabilité de détection d'une valeur d'énergie égale à j sachant que le rayonnement incident au détecteur a une énergie égale à i,
- comparaison de la signature ainsi reconstruite à des signatures de matériaux étalons mémorisées dans une base de données aux fins d'identification d'un matériau constitutif de l'objet.

2. Procédé d'analyse selon la revendication 1, **caractérisé en ce que** l'étape de reconstruction d'une signature de l'objet met en œuvre une méthode basée sur une approche de type problème inverse.

3. Procédé d'analyse selon l'une des revendications précédentes, **caractérisé en ce que** le détecteur spectrométrique placé en diffusion (6) est configuré de façon à présenter un axe de détection (D) formant, avec un axe central (Z) du rayonnement incident, un angle de diffusion (θ) compris entre 1° et 5°.

4. Procédé d'analyse selon l'une des revendications précédentes, **caractérisé en ce qu'**il comprend une première étape préalable de calibrage de la matrice de réponse ($R_{Ed}$) du détecteur spectrométrique placé en diffusion (6), une seconde étape préalable de calibrage de la matrice de réponse ($R_{Et}$) du détecteur spectrométrique placé en transmission (7), une troisième étape préalable de calibrage de la matrice de réponse angulaire ($R_{\theta}$) du système de détection, ces première, deuxième et troisième étapes préalables de calibrage étant réalisées « off-line ».

5. Procédé d'analyse selon la revendication 4, **caractérisé en ce que** les première et deuxième étapes préalables de calibrage sont effectuées par simulation à l'aide d'un logiciel de simulation du type Monte-Carlo.

6. Procédé d'analyse selon la revendication 5, **caractérisé en ce que** la matrice de réponse du détecteur spectrométrique placé en diffusion (6) obtenue par simulation est affinée à l'aide d'au moins une mesure d'un spectre diffusé par un matériau étalon irradié par une source de rayons gamma, de même que la matrice de réponse du détecteur spectrométrique placé en transmission (7) obtenue par simulation est affinée à l'aide d'au moins une mesure d'un spectre transmis par un matériau étalon irradié par une source de rayons gamma.

7. Système de détection pour l'analyse d'un objet comprenant :

   - une source (1) de rayonnement photonique,
   - une zone (4) pour la réception d'un objet à analyser,
   - un détecteur spectrométrique (6) placé en diffusion en aval de cette zone de réception d'objet (4), pour l'acquisition d'un spectre énergétique, dit spectre en diffusion mesuré, diffusé par l'objet selon un angle de diffusion (θ) compris entre 1° et 15°,

   **caractérisé en ce qu'**il comprend :

- un détecteur spectrométrique placé en transmission pour l'acquisition d'un spectre énergétique transmis par l'objet selon l'axe du rayonnement incident, dit spectre en transmission mesuré,

- - des moyens informatiques (8) de traitement pour la reconstruction d'une fonction, dite signature (*f*), représentative de l'objet, à partir du spectre en diffusion mesuré (g) et du spectre en transmission mesuré (h), et pour la comparaison de la signature reconstruite (*f*) avec des signatures de matériaux étalons mémorisées dans une base de données aux fins d'identification d'un matériau constitutif de l'objet, la reconstruction de la signature (*f*) comprenant une opération de construction d'une matrice de réponse globale (*A*) du système de détection qui établit une relation entre une énergie détectée par le détecteur spectrométrique placé en diffusion et un transfert de quantité de mouvement, la matrice de réponse globale (*A*) étant construite à partir d'une matrice de réponse angulaire calibrée ($R_\theta$) du système de détection, d'une matrice de réponse ($R_{Ed}$) du détecteur spectrométrique (6) placé en diffusion, d'une matrice de réponse ($R_{Et}$) du détecteur spectrométrique (7) placé en transmission, et d'un spectre incident atténué ($S_{inc}$ x *Att*) estimé en utilisant le spectre en transmission mesuré (h), selon les équations suivantes

$$h = R_{et} \cdot (S_{inc} \times A_{tt})\text{'}$$

$$g = (R_{ed} \times S_{inc} \times A_{tt}) \cdot R_\theta \cdot f = A \cdot f$$

ou directement selon l'approximation:

$$A = \left(R_{Ed} \times \left(R_{Et} \cdot \left(S_{inc} \times Att\right)\right)\right) \cdot R_\theta$$

étant précisé que chaque terme $R_\theta$ (j,k) de la matrice de réponse angulaire ($R_\theta$) du système de détection correspondant à la probabilité qu'un transfert de quantité de mouvement k donne lieu à la détection d'un photon d'énergie j, que chaque terme $R_{Ed}$ (j,i) de la matrice de réponse ($R_{Ed}$) du détecteur spectrométrique (6) placé en diffusion représente la probabilité de détection d'une valeur d'énergie égale à j sachant que le rayonnement incident au détecteur a une énergie égale à i, et que de même chaque terme $R_{Et}$ (j,i) de la matrice de réponse ($R_{Et}$) du détecteur spectrométrique (7) placé en transmission représente la probabilité de détection d'une valeur d'énergie égale à j sachant que le rayonnement incident au détecteur a une énergie égale à i,

8. Système de détection selon la revendication 7, **caractérisé en ce qu'**il comprend deux détecteurs spectrométriques (6,7), l'un (6) étant le détecteur spectrométrique placé en diffusion pour l'acquisition du spectre en diffusion mesuré, l'autre (7) étant le détecteur spectrométrique placé en transmission pour l'acquisition du spectre en transmission mesuré.

9. Système de détection selon la revendication 7, **caractérisé en ce qu'**il comprend un unique détecteur spectrométrique (6) qui peut être déplacé entre la position en transmission et la position en diffusion, ce détecteur unique (6) étant ainsi alternativement le détecteur spectrométrique placé en transmission pour l'acquisition du spectre en transmission mesuré et le détecteur spectrométrique placé en diffusion pour l'acquisition du spectre en diffusion mesuré.

10. Système de détection selon la revendication 7 à 9, **caractérisé en ce que** les moyens informatiques (8) de traitement sont aptes à mettre en œuvre une méthode basée sur une approche de type problème inverse.

11. Système de détection selon l'une des revendications 7 à 10, **caractérisé en ce que** le détecteur spectrométrique (6) placé en diffusion est configuré de façon à présenter un axe de détection (D) formant, avec un axe central (Z) du rayonnement incident, un angle de diffusion ($\theta$) compris entre 1° et 5°.

**Patentansprüche**

1. Verfahren zur Analyse eines Objekts mittels eines Detektionssystems, enthaltend einen spektrometrischen Detektor (6), wobei das Verfahren die nachstehenden Schritte umfasst:

- Bestrahlen des Objekts mit einer einfallenden Photonenstrahlung,
- Erfassen eines Energiespektrums, gemessenes Streuspektrum genannt, das von dem Objekt unter einem Streuwinkel ($\theta$) zwischen 1° und 15° gestreut wird, mittels des auf Streuung gesetzten spektrometrischen Detektors (6),

**dadurch gekennzeichnet, dass** es ferner die nachstehenden Schritte umfasst:

- Erfassen eines Energiespektrums, gemessenes Transmissionsspektrum genannt, das von dem Objekt entlang der Achse der einfallenden Strahlung übertragen wird, mittels eines auf Transmission gesetzten spektrometrischen Detektors (7),
- Rekonstruieren einer Funktion (*f*), Signatur genannt, die repräsentativ ist für das Objekt, ausgehend zugleich von dem gemessenen Streuspektrum (g) und von dem gemessenen Transmissionsspektrum (h), wobei dieser Schritt eine Operation zum Erstellen einer globalen Reaktionsmatrix (A) des Detektionssystems umfasst, die eine Beziehung zwischen einer von dem auf Streuung gesetzten Detektor erfassten Energie und einem Impulsaustausch herstellt, wobei die globale Reaktionsmatrix (A) ausgehend von einer kalibrierten Winkelreaktionsmatrix ($R_\theta$) des Detektionssystems, einem unter Verwendung des gemessenen Transmissionsspektrums (h) geschätzten abgeschwächten Einfallsspektrum ($S_{inc}$ x Att), einer Reaktionsmatrix ($R_{Ed}$) des auf Streuung gesetzten spektrometrischen Detektors (6) und einer Reaktionsmatrix ($R_{Et}$) des auf Transmission gesetzten spektrometrischen Detektors (7) nach den folgenden Gleichungen erstellt wird:

$$h = R_{et} \cdot (S_{inc} \, x \, A_{tt})$$

$$g = (R_{ed} \, x \, S_{inc} \, x \, A_{tt}) \cdot R_\theta \cdot f = A \cdot f$$

oder direkt nach der Näherung:

$$A = (R_{Ed} \, x \, (R_{Et} \cdot (S_{inc} \, x \, Att))) \cdot R_\theta$$

wobei jeder Term $R_\theta$(j, k) der Winkelreaktionsmatrix ($R_\theta$) des Detektionssystems der Wahrscheinlichkeit entspricht, dass ein Impulsaustausch k zum Erfassen eines Photons der Energie j führt, wobei jeder Term $R_{Ed}$ (j, i) der Reaktionsmatrix ($R_{Ed}$) des auf Streuung gesetzten spektrometrischen Detektors die Wahrscheinlichkeit der Erfassung eines Energiewertes gleich j darstellt, wobei die am Detektor einfallende Strahlung eine Energie gleich i aufweist, und wobei ebenso jeder Term $R_{Et}$(j, i) der Reaktionsmatrix ($R_{Et}$) des auf Transmission gesetzten spektrometrischen Detektors (7) die Wahrscheinlichkeit der Erfassung eines Energiewertes gleich j darstellt, wobei die am Detektor einfallende Strahlung eine Energie gleich i aufweist,
- Vergleichen der so rekonstruierten Signatur mit Standardmaterialsignaturen, die in einer Datenbank abgespeichert sind, um ein das Objekt bildendes Material zu identifizieren.

2. Analyseverfahren nach Anspruch 1, **dadurch gekennzeichnet, dass** der Schritt der Rekonstruktion einer Signatur des Objekts ein Verfahren anwendet, das auf einem Ansatz vom Typ inverses Problem basiert.

3. Analyseverfahren nach einem der vorangehenden Ansprüche, **dadurch gekennzeichnet, dass** der auf Streuung gesetzte spektrometrische Detektor (6) so ausgelegt ist, dass er eine Detektionsachse (D) aufweist, die mit einer Mittelachse (Z) der einfallenden Strahlung einen Streuwinkel ($\theta$) zwischen 1° und 5° einschließt.

4. Analyseverfahren nach einem der vorangehenden Ansprüche, **dadurch gekennzeichnet, dass** es einen ersten vorherigen Schritt des Kalibrierens der Reaktionsmatrix ($R_{Ed}$) des auf Streuung gesetzten spektrometrischen Detektors (6), einen zweiten vorherigen Schritt des Kalibrierens der Reaktionsmatrix ($R_{Et}$) des auf Transmission gesetzten spektrometrischen Detektors (7) und einen dritten vorherigen Schritt des Kalibrierens der Winkelreaktionsmatrix ($R_\theta$) des Detektionssystems umfasst, wobei dieser erste, zweite und dritte vorherige Schritt des Kalibrierens "offline" durchgeführt werden.

5. Analyseverfahren nach Anspruch 4, **dadurch gekennzeichnet, dass** der erste und der zweite vorherige Schritt des Kalibrierens durch Simulation mittels einer Simulationssoftware vom Typ Monte-Carlo erfolgen.

6. Analyseverfahren nach Anspruch 5, **dadurch gekennzeichnet, dass** die durch Simulation erhaltene Reaktionsmatrix des auf Streuung gesetzten spektrometrischen Detektors (6) mittels zumindest einer Messung eines Spektrums verfeinert wird, das von einem Standardmaterial gestreut wird, das mit einer Gammastrahlungsquelle bestrahlt wird, und ebenso die durch Simulation erhaltene Reaktionsmatrix des auf Transmission gesetzten spektrometrischen Detektors (7) mittels zumindest einer Messung eines Spektrums verfeinert wird, das von einem Standardmaterial übertragen wird, das mit einer Gammastrahlungsquelle bestrahlt wird.

7. Detektionssystem zur Analyse eines Objekts, enthaltend:

   - eine Photonenstrahlungsquelle (1),
   - einen Bereich (4) zum Aufnehmen eines zu analysierenden Objekts,
   - einen auf Streuung gesetzten spektrometrischen Detektor (6), der diesem Objektaufnahmebereich (4) nachgelagert ist, für die Erfassung eines Energiespektrums, gemessenes Streuspektrum genannt, das von dem Objekt unter einem Streuwinkel ($\theta$) zwischen 1° und 15° gestreut wird,

   **dadurch gekennzeichnet, dass** es enthält:

   - einen auf Transmission gesetzten spektrometrischen Detektor für die Erfassung eines Energiespektrums, gemessenes Transmissionsspektrum genannt, das von dem Objekt entlang der Achse der einfallenden Strahlung übertragen wird,
   - Datenverarbeitungsmittel (8) für die Rekonstruktion einer Funktion, Signatur ($f$) genannt, die repräsentativ ist für das Objekt, ausgehend von dem gemessenen Streuspektrum (g) und dem gemessenen Transmissionsspektrum (h), und für das Vergleichen der rekonstruierten Signatur ($f$) mit Standardmaterialsignaturen, die in einer Datenbank abgespeichert sind, um ein das Objekt bildendes Material zu identifizieren, wobei die Rekonstruktion der Signatur ($f$) eine Operation zum Erstellen einer globalen Reaktionsmatrix (A) des Detektionssystems umfasst, die eine Beziehung zwischen einer von dem auf Streuung gesetzten spektrometrischen Detektor erfassten Energie und einem Impulsaustausch herstellt, wobei die globale Reaktionsmatrix ($A$) ausgehend von einer kalibrierten Winkelreaktionsmatrix ($R_\theta$) des Detektionssystems, einer Reaktionsmatrix ($R_{Ed}$) des auf Streuung gesetzten spektrometrischen Detektors (6), einer Reaktionsmatrix ($R_{Et}$) des auf Transmission gesetzten spektrometrischen Detektors (7) und einem unter Verwendung des gemessenen Transmissionsspektrums (h) geschätzten abgeschwächten Einfallsspektrum ($S_{inc}$ x $Att$) nach den folgenden Gleichungen erstellt wird:

$$h = R_{et} \bullet (S_{inc} \text{ x } A_{tt})$$

$$g = (R_{ed} \text{ x } S_{inc} \text{ x } A_{tt}) \bullet R_\theta \bullet f = A \bullet f$$

   oder direkt nach der Näherung:

$$A = (R_{Ed} \text{ x } (R_{Et} \bullet (S_{inc} \text{ x } Att))) \bullet R_\theta$$

   wobei jeder Term $R_\theta$ (j, k) der Winkelreaktionsmatrix ($R_\theta$) des Detektionssystems der Wahrscheinlichkeit entspricht, dass ein Impulsaustausch k zur Erfassung eines Photons der Energie j führt, wobei jeder Term $R_{Ed}$ (j, i) der Reaktionsmatrix ($R_{Ed}$) des auf Streuung gesetzten spektrometrischen Detektors (6) die Wahrscheinlichkeit der Erfassung eines Energiewertes gleich j darstellt, wobei die am Detektor einfallende Strahlung eine Energie gleich i aufweist, und wobei ebenso jeder Term $R_{Et}$ (j, i) der Reaktionsmatrix ($R_{Et}$) des auf Transmission gesetzten spektrometrischen Detektors (7) die Wahrscheinlichkeit der Erfassung eines Energiewertes gleich j darstellt, wobei die am Detektor einfallende Strahlung eine Energie gleich i aufweist.

8. Detektionssystem nach Anspruch 7, **dadurch gekennzeichnet, dass** es zwei spektrometrische Detektoren (6, 7) enthält, wobei der eine (6) ein auf Streuung gesetzter spektrometrischer Detektor zur Erfassung des gemessenen Streuspektrums ist und der andere (7) der auf Transmission gesetzte spektrometrische Detektor zur Erfassung des gemessenen Transmissionsspektrums ist.

9. Detektionssystem nach Anspruch 7, **dadurch gekennzeichnet, dass** es einen spektrometrischen Einzeldetektor (6) enthält, der zwischen der Transmissionsposition und der Streuungsposition verlagerbar ist, wobei dieser Einzeldetektor (6) somit wechselweise der auf Transmission gesetzte spektrometrische Detektor zur Erfassung des gemessenen Transmissionsspektrums und der auf Streuung gesetzte spektrometrische Detektor zur Erfassung des gemessenen Streuspektrums ist.

10. Detektionssystem nach Anspruch 7 bis 9, **dadurch gekennzeichnet, dass** die Datenverarbeitungsmittel (8) dazu ausgelegt sind, ein Verfahren anzuwenden, das auf einem Ansatz vom Typ inverses Problem basiert.

11. Detektionssystem nach einem der Ansprüche 7 bis 10, **dadurch gekennzeichnet, dass** der auf Streuung gesetzte spektrometrische Detektor (6) so ausgelegt ist, dass er eine Detektionsachse (D) aufweist, die mit einer Mittelachse (Z) der einfallenden Strahlung einen Streuwinkel ($\theta$) zwischen 1° und 5° einschließt.

**Claims**

1. A method of analyzing an object using a detection system comprising a spectrometric detector (6), the method comprising the following steps:

    - irradiating the object with incident photon radiation,
    - acquiring an energy spectrum, referred to as measured scattering spectrum, scattered by the object at a scattering angle ($\theta$) comprised between 1° and 15° using the spectrometric detector (6) placed for scattering,

    **characterized in that** it further comprises the following steps:

    - acquiring a spectrum of energy transmitted by the object along the axis of incident radiation, referred to as measured transmission spectrum, using a spectrometric detector (7) placed for transmission,
    - reconstructing a function ($f$), referred to as signature, representative of the object, based both on the measured scattering spectrum (g) and the measured transmission spectrum (h), this step comprising an operation of constructing an overall response matrix ($A$) of the detection system which establishes a relationship between an energy detected by the spectrometric detector placed for scattering and a momentum transfer, the overall response matrix ($A$) being constructed from a calibrated angular response matrix ($R_\theta$) of the detection system, from an incident spectrum attenuated by the object ($S_{inc}$ x $Att$) estimated using the measured transmission spectrum (h), from a response matrix ($R_{Ed}$) of the spectrometric detector (6) placed for scattering and from response matrix ($R_{Et}$) of the spectrometric detector (7) placed for transmission, according to the following equations:

$$h = R_{Et} \cdot \left( S_{inc} \times Att \right)$$

$$g = \left( R_{Ed} \times S_{inc} \times Att \right) \cdot R_\theta \cdot f = A \cdot f$$

    or directly according to the approximation:

$$A = \left( R_{Ed} \times \left( R_{Et} \cdot \left( S_{inc} \times Att \right) \right) \right) \cdot R_\theta$$

    it being understood that each term $Re$ (j,k) of the angular response matrix ($Re$) of the detection system corresponds to the probability that a momentum transfer k gives rise to the detection of a photon of energy j, that each term $R_{Ed}$ (j,i) of the response matrix ($R_{Ed}$) of the spectrometric detector (6) placed for scattering represents the probability of detecting an energy value equal to j knowing that the radiation which is incident on the detector has an energy equal to i, and that each term $R_{Et}$ (j,i) of the response matrix ($R_{Et}$) of the spectrometric detector (7) placed for transmission represents the probability of detecting an energy value equal to j knowing that the radiation which is incident on the detector has an energy equal to i,
    - comparing the signature so reconstructed with signatures of calibration materials stored in a database for the purposes of identifying a material constituting the object.

2. An analyzing method according to claim 1, **characterized in that** the step of reconstructing a signature of the object implements a method based on an inverse problem type approach.

3. An analyzing method according to one of the preceding claims, **characterized in that** the spectrometric detector (6) placed for scattering is configured so as to present a detection axis (D) forming, with a central axis (Z) of the incident radiation, a scattering angle ($\theta$) comprised between 1° and 5°.

4. An analyzing method according to one of the preceding claims, **characterized in that** it comprises a first prior step of calibrating the response matrix ($R_{Ed}$) of the spectrometric detector placed for scattering (6), a second prior step of calibrating the response matrix ($R_{Et}$) of the spectrometric detector placed for transmission (7), and a third prior step of calibrating the angular response matrix ($R_\theta$) of the detection system, these first, second and third prior calibrating steps being carried out "off-line".

5. An analyzing method according to claim 4, **characterized in that** the first and second prior steps of calibrating are carried out by simulation using a simulation software application of Monte-Carlo type.

6. An analyzing method according to claim 5, **characterized in that** the response matrix of the spectrometric detector placed for scattering (6) obtained by simulation is refined using at least one measurement of a spectrum scattered by a calibration material irradiated by a source of gamma rays, in the same way as the response matrix of the spectrometric detector placed for transmission (7) obtained by simulation is refined using at least one measurement of a spectrum transmitted by a calibration material irradiated by a source of gamma rays.

7. A detection system for analyzing an object comprising:

   - a source (1) of photon radiation,
   - a zone (4) for the reception of an object to analyze,
   - a spectrometric detector (6) placed for scattering downstream of this object receiving zone (4), for acquiring an energy spectrum, referred to as measured scattering spectrum, scattered by the object at a scattering angle ($\theta$) comprised between 1° and 15°,

   **characterized in that** it comprises:

   - a spectrometric detector placed for transmission for acquiring a spectrum of energy transmitted by the object along the axis of incident radiation, referred to as measured transmission spectrum,
   - computer processing means (8) for reconstructing a function, referred to as signature (*f*), representative of the object, based on the measured scattering spectrum (g) and on the measured transmission spectrum (h), and for comparing the reconstructed signature (*f*) with signatures of calibration materials stored in a database for the purposes of identifying a material constituting the object, the reconstruction of the signature (*f*) comprising an operation of constructing an overall response matrix (*A*) of the detection system, which establishes a relationship between an energy detected by the spectrometric detector placed for scattering and a momentum transfer, the overall response matrix (*A*) being constructed from a calibrated angular response matrix ($R_\theta$) of the detection system, from a response matrix ($R_{Ed}$) of the spectrometric detector (6) placed for scattering, from a response matrix ($R_{Et}$) of the spectrometric detector (7) placed for transmission, and from an attenuated incident spectrum ($S_{inc} \times Att$) estimated using the measured transmission spectrum (h), according to the following equations:

$$h = R_{Et} \cdot \left( S_{inc} \times Att \right)$$

$$g = \left( R_{Ed} \times S_{inc} \times Att \right) \cdot R_\theta \cdot f = A \cdot f$$

or directly according to the approximation:

$$A = \left( R_{Ed} \times \left( R_{Et} \cdot \left( S_{inc} \times Att \right) \right) \right) \cdot R_\theta$$

it being understood that each term $Re$ (j,k) of the angular response matrix $(Re)$ of the detection system corresponding to the probability that a momentum transfer k gives rise to the detection of a photon of energy j, that each term $R_{Ed}$ (j,i) of the response matrix $(R_{Ed})$ of the spectrometric detector (6) placed for scattering represents the probability of detecting an energy value equal to j knowing that the radiation which is incident on the detector has an energy equal to i, and that each term $R_{Et}$ (j,i) of the response matrix $(R_{Et})$ of the spectrometric detector (7) placed for transmission represents the probability of detecting an energy value equal to j knowing that the radiation which is incident on the detector has an energy equal to i,

8. A detection system according to claim 7, **characterized in that** it comprises two spectrometric detectors (6,7), one (6) being the spectrometric detector placed for scattering for acquiring the measured scattering spectrum, the other (7) being the spectrometric detector placed for transmission for acquiring the measured transmission spectrum.

9. A detection system according to claim 7, **characterized in that** it comprises a single spectrometric detector (6) which may be moved between the position for transmission and the position for scattering, this single detector (6) thus being alternatively the spectrometric detector placed for transmission for acquiring the measured transmission spectrum and the spectrometric detector placed for scattering for acquiring the measured scattering spectrum.

10. A detection system according to claim 7 to 9, **characterized in that** the computer processing means (8) are configured to implement a method based on an inverse problem type approach.

11. A detection system according to one of claims 7 to 10, **characterized in that** the spectrometric detector (6) placed for scattering is configured so as to present a detection axis (D) forming, with a central axis (Z) of the incident radiation, a scattering angle ($\theta$) comprised between 1° and 5°.

Fig. 1

Fig. 2

Fig. 3

Fig. 4

Fig. 5

Fig.6

Fig.7

Fig. 8

Fig. 9

Fig. 10

A (H$_2$O 40 mm)

E$_j$ (keV)

x (nm-1)

## Fig.11

A (C$_2$H$_6$CO 40mm)

E$_j$ (keV)

x (nm-1)

## Fig.12

Fig.13

Fig.14

Fig. 15

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20090168958 A
- US 20120133516 A
- WO 2006075296 A
- US 5428657 A
- WO 2013098520 A

**Littérature non-brevet citée dans la description**

- **PANI, S. et al.** Characterization of breast tissue using energy-dispersive X-ray diffraction computed tomography. *Applied Radiation and Isotopes,* 2010, vol. 68 (10), 1980-1987